# EUROPÄISCHE PATENTSCHRIFT

(11) **EP 1 422 396 B1**
(45) Veröffentlichungstag und Bekanntmachung des Hinweises auf die Patenterteilung: **27.09.2006**
(21) Anmeldenummer: 03019938.4
(22) Anmeldetag: 02.09.2003
(51) Int. Cl.: F01N 3/28

(54) **Mehrbettkatalysator**
Multiple bed catalyst
catalyseur à lits multiples

(30) Priorität: 20.11.2002 DE 10254036; 15.01.2003 DE 10301233
(43) Veröffentlichungstag der Anmeldung: 26.05.2004
(73) Patentinhaber: J. Eberspächer GmbH & Co. KG, 73730 Esslingen (DE)
(72) Erfinder: Wörner, Siegfried, 73734 Esslingen (DE); Wirth, Georg, 73230 Kirchheim/Teck (DE); Sigel, Ulrich, 73207 Plochingen (DE); Alles, Markus, 66583 Spiesen (DE)
(74) Vertreter: Patentanwalts-Partnerschaft Rotermund + Pfusch + Bernhard

(56) Entgegenhaltungen:
- EP-A- 0 283 913
- DE-A- 19 626 692
- DE-A- 19 627 289
- FR-A- 2 333 950
- US-A- 4 864 095
- US-B1- 6 447 735
- PATENT ABSTRACTS OF JAPAN Bd. 0111, Nr. 35 (M-585), 28. April 1987 (1987-04-28) & JP 61 274829 A (HONDA MOTOR CO LTD), 5. Dezember 1986 (1986-12-05)
- PATENT ABSTRACTS OF JAPAN Bd. 0050, Nr. 47 (M-061), 28. März 1981 (1981-03-28) & JP 56 002420 A (NIPPON SOKEN INC), 12. Januar 1981 (1981-01-12)

## Beschreibung

Die vorliegende Erfindung betrifft einen Mehrbettkatalysator für einen Abgasstrang einer Brennkraftmaschine, insbesondere eines Kraftfahrzeugs.

Ein Mehrbettkatalysator weist mehrere katalyltisch wirkende Monolithen auf, die in axialer Richtung hintereinander angeordnet sind und im Betrieb in Reihe durchströmt werden. Beispielsweise enthält ein Zweibettkatalysator zwei Monolithen.

Für bestimmte Anwendungen kann es erforderlich sein, zwischen zwei benachbarten Monolithen einen axialen Mindestabstand sicherzustellen, beispielsweise um dort eine Sonde anbringen zu können.

JP 61274829 sowie FR 2333950 offenbaren zwei durch Ringe und ein Zwischenstück beabstandete Monolithen. Nachteilig sind hier der durch das Zwischenstück bedingte größere Mindestabstand der Verlust der Möglichkeit, eine Sonde einfach zwischen die Monolithen einbringen zu können sowie die begrenzte Fähigkeit der Ringe, Herstellungstoleranzen auszugleichen.

Die vorliegende Erfindung beschäftigt sich mit dem Problem, für einen Mehrbettkatalysator der eingangs genannten Art eine verbesserte Ausführungsform anzugeben, die es insbesondere ermöglicht, einen axialen Mindestabstand zwischen zwei benachbarten Monolithen dauerhaft zu gewährleisten.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, die benachbarten Monolithen mit Hilfe von geeigneten Distanzelementen aneinander in axialer Richtung abzustützen. Auf diese Weise kann ein gewünschter Mindestabstand zwischen den Monolithen aufrechterhalten werden. Derartige Distanzelemente können mit vergleichsweise geringem Aufwand beim Einsetzen der Monolithen in ein Gehäuse des Mehrbettkatalysators gleichzeitig mit eingebaut werden. Gehäuseseitige Maßnahmen sind dabei nicht erforderlich, so dass der Aufwand zur Realisierung des erfindungsgemäßen Mehrbettkatalysators vergleichsweise gering ist.

Von besonderen Vorteil ist hierbei die Lagerung der beiden Monolithen mit Hilfe einer gemeinsamen Lagermatte, wodurch sich der Zusammenbau des Mehrbettkatalysators erheblich vereinfacht.

Zweckmäßig ist eine Ausführungsform, bei welcher die Distanzelemente jeweils durch ein Drahtgestrick aus einem hitzebeständigen Draht gebildet sind. Diese Bauweise ist in mehrfacher Hinsicht von Vorteil. Zum einen können solche Drahtgestrick-Distanzelemente elastisch nachgiebig ausgebildet werden, so dass sich die Monolithen, die üblicherweise aus einer spröden Keramik bestehen, über die Distanzelemente elastisch aneinander abstützen, wodurch die Gefahr einer Beschädigung der Monolithen reduziert ist. Zum anderen können solche Drahtgestrick-Distanzelemente Wärmedehnungseffekte elastisch kompensieren, ohne dass dabei allzu große Spannungen auftreten. Des Weiteren eignen sich solche Drahtgestrick-Distanzelemente zu einer thermisch isolierten Abstützung der Monolithen am Gehäuse, wodurch "hot-spots" genannte Hochtemperaturzonen am Gehäuse vermieden werden.

Gemäß einer anderen Ausführungsform kann die Lagermatte für jedes Distanzelement eine Aussparung aufweisen, in der das jeweilige Distanzelement angeordnet ist und von der aus sich das jeweilige Distanzelement axial zwischen den Monolithen radial nach innen erstreckt. Diese Bauweise vereinfacht die Montage, da zum einen die Distanzelemente dann eingesetzt werden können, wenn die Lagermatte bereits die Monolithen umhüllt. Zum anderen kann über die Positionierung der Aussparungen die gewünschte umfangsmäßige Verteilung der Distanzelemente vorgegeben werden, was ein ordnungsgemäßes Positionieren der Distanzelemente für den jeweiligen Monteur vereinfacht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen axialen Längsschnitt durch einen erfindungsgemäßen Mehrbettkatalysator entsprechend Schnittlinien I in Fig. 2,
- Fig. 2: eine Draufsicht auf den Mehrbettkatalysator aus Fig. 1 entsprechend einem Ansichtspfeil II in Fig. 1,
- Fig. 3: einen Querschnitt durch den Mehrbettkatalysator entsprechend Schnittlinien III in Fig. 1,
- Fig. 4: eine Draufsicht auf den Mehrbettkatalysator entsprechend einem Ansichtspfeil IV in Fig. 3,
- Fig. 5: eine teilweise geschnittene Seitenansicht auf eine Lagermatte im Bereich eines Distanzelements bei einer besonderen Ausführungsform,
- Fig. 6: eine Ansicht wie in Fig. 5, jedoch bei einer weiteren Ausführungsform.

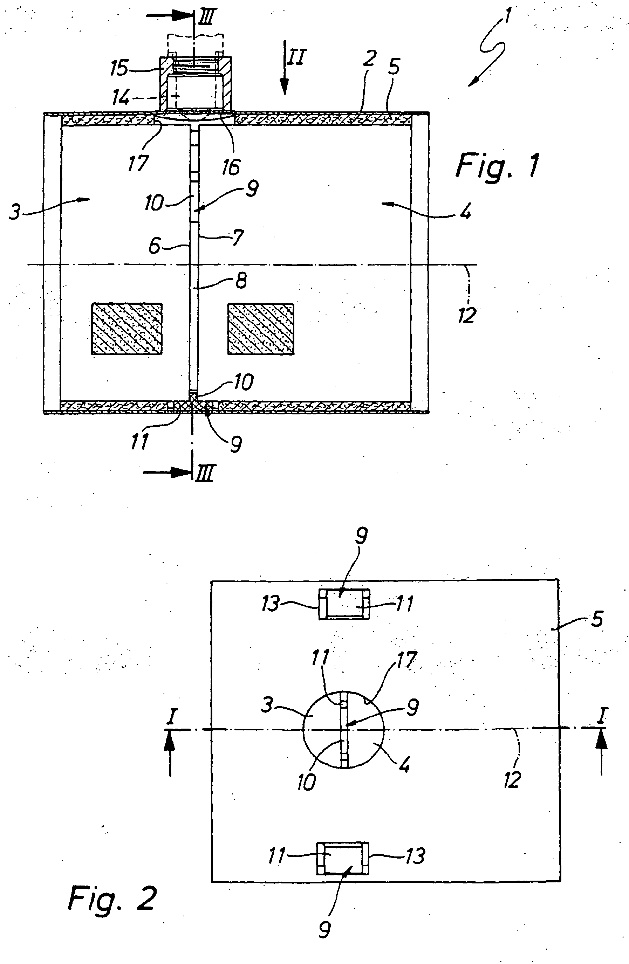

Entsprechend den Fig. 1 bis 4 besitzt ein erfindungsgemäßer Mehrbettkatalysator 1 ein Gehäuse 2, in dem mehrere, hier zwei, Monolithen 3, 4 untergebracht sind. Da der Mehrbettkatalysator 1 im vorliegenden Beispiel nur zwei Monolithen 3, 4 enthält, kann dieser auch als Zweibettkatalysator bezeichnet werden. Die Monolithen 3, 4 besitzen zweckmäßig einen kreiszylindrischen Körper.

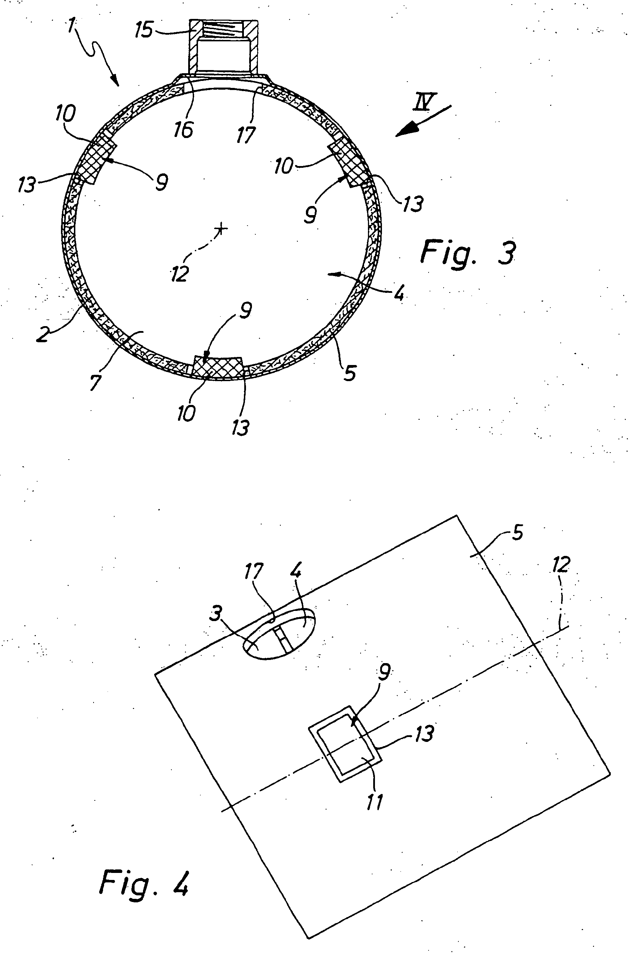

In den Ansichten der Fig. 2 und 4 ist zum besseren Verständnis das Gehäuse 2 weggelassen.

Die beiden Monolithen 3, 4 sind als Katalysatorelemente ausgebildet, d.h. sie sind katalytisch wirksam.

Vorzugsweise wird ein solcher Mehrbettkatalysator 1 in einem Abgasstrang einer Brennkraftmaschine, insbesondere eines Kraftfahrzeugs, verwendet.

Zur Lagerung der beiden Monolithen 3, 4 im Gehäuse 2 ist eine gemeinsame Lagermatte 5 vorgesehen, die radial zwischen den Monolithen 3, 4 und dem Gehäuse 2 angeordnet ist. Die Lagermatte 5 besteht aus einem hitzebeständigen Material und umhüllt die beiden Monolithen 3, 4 an deren Umfang. Im Einbauzustand stützen sich die beiden Monolithen 3, 4 radial über ihre gemeinsame Lagermatte 5 am Gehäuse 2 ab. Die Lagermatte 2 dient einerseits zur thermischen Isolierung des Gehäuses 2 gegenüber den Monolithen 3, 4. Andererseits sind die stoßempfindlichen Monolithen 3, 4, die üblicherweise aus einer spröden Keramik hergestellt sind, in der Lagermatte 5 weich gebettet, d.h. Erschütterungen des Mehrbettkatalysators 1, die im Betrieb auftreten können, werden von der Lagermatte 5 gedämpft.

Die beiden Monolithen 3, 4 sind dabei im Gehäuse 2 bezüglich einer Durchströmungsrichtung hintereinander angeordnet, so dass sie im Betrieb des Mehrbettkatalysators 1 in Reihe durchströmt werden.

Die beiden Monolithen 3, 4 sind an einander zugewandten axialen Stirnseiten 6, 7 voneinander axial beabstandet, so dass axial zwischen den beiden Monolithen 3,4 ein Spalt 8 ausgebildet ist. Im Bereich dieses Spalts 8 sind axial zwischen den beiden Monolithen 3,4 mehrere, hier drei, Distanzelemente 9 angeordnet, über die sich die beiden Monolithen 3,4 axial aneinander abstützen. Die Distanzelemente 9 gewährleisten somit einen vorbestimmten axialen Mindestabstand zwischen den beiden Monolithen 3, 4. Die Distanzelemente 9 sind entlang des Umfangs der Monolithen 3, 4, vorzugsweise symmetrisch, verteilt angeordnet. Die Distanzelemente 9 bestehen aus einem hitzebeständigen Material, so dass sie den Betriebsbedingungen, insbesondere der Betriebstemperatur, des Mehrbettkatalysators 1 standhalten.

Die am Umfang der Monolithen 3, 4 angeordneten Distanzelemente 9 sind zweckmäßig so dimensioniert, dass sie sich radial außen am Gehäuse 2 abstützen können.

Die Distanzelemente 9 sind hier so ausgebildet, dass sie einen T-förmigen axialen Querschnitt besitzen (vgl. Fig. 1). Grundsätzlich sind beliebige andere geeignete Querschnitte möglich, beispielsweise ein L-förmiger Querschnitt. Insbesondere bei einem L-förmigen oder - wie hier - bei einem T-förmigen Querschnitt weist jedes Distanzelement 9 einen Distanzierabschnitt 10 und einen Halteabschnitt 11 auf. Die Distanzelemente 9 sind dabei radial außen an den Monolithen 3, 4 angeordnet, wobei sich der jeweilige Distanzierabschnitt 10 axial zwischen den Monolithen 3, 4 radial nach innen erstreckt. Die Distanzierabschnitte 10 bewirken somit die Einhaltung des gewünschten Mindestabstands zwischen den beiden Monolithen 3, 4. Im Unterschied dazu schließen die Halteabschnitte 11 jeweils radial außen an den zugehörigen Distanzierabschnitt 10 an und übergreifen radial außen in axialer Richtung beim T-förmigen Querschnitt beide Monolithen 3, 4 und beim L-förmigen Querschnitt nur einen der Monolithen 3, 4. Die Halteabschnitte 11 sind dabei so dimensioniert, dass sie radial am Gehäuse 2 anliegen, so dass sich die Monolithen 3, 4 im Bereich des Spalts 8 auch über die Halteabschnitte 11 der Distanzelemente 9 radial am Gehäuse 2 abstützen.

Entsprechend einer bevorzugten Ausführungsform sind die Distanzelemente 9 jeweils durch ein Drahtgestrick gebildet, wobei zu ihrer Herstellung ein geeigneter, hitzebeständiger Draht verwendet wird. Das Drahtgestrick der Distanzelemente 9 ist dabei zweckmäßig so ausgestaltet, dass die Distanzelemente 9 einerseits den gewünschten Mindestabstand zwischen den beiden Monolithen 3, 4 in allen Betriebszuständen des Mehrbettkatalysators 1 gewährleisten können und zum anderen hinreichend elastisch nachgiebig sind, um Wärmedehnungseffekte zu kompensieren. Gleichzeitig kann das Drahtgestrick so gestaltet werden, dass sich eine ausreichende thermische Isolierung zwischen dem Gehäuse 2 und den Monolithen 3, 4 ergibt.

Wie insbesondere aus Fig. 3 hervorgeht, können die Distanzelemente 9 an die kreiszylindrische Form der Monolithen 3, 4 angepasst sein, so dass sie bezüglich einer Längsmittelachse 12 der Monolithen 3, 4 als Kreisbogensegmente, insbesondere mit einem Bogenwinkel von etwa 20°, ausgebildet sind. Sofern die Distanzelemente 9 als Gestrick ausgebildet sind, können sie sich beim Anbringen entsprechend verformen, so dass sie nicht vorgeformt sein müssen.

Bei der hier gezeigten, bevorzugten Ausführungsform besitzt die Lagermatte 5 für jedes Distanzelement 9 eine Aussparung 13, in der das jeweilige Distanzelemente 9 die Lagermatte 5 radial durchdringt. Hierdurch ist es beispielsweise möglich, die Distanzelemente 9 beim Zusammenbau des Mehrbettkatalysators 1 erst dann einzusetzen, wenn die Lagermatte 5 bereits die beiden Monolithen 3, 4 umhüllt. Gleichzeitig definieren die vorgegebenen, z.B. ausgestanzten, Aussparungen 13 die optimalen Positionen für die Distanzelemente 9. Bevorzugt ist jedoch eine Ausführungsform, bei der die Distanzelemente 9 bereits an der Lagermatte 5 angebracht werden, bevor in diese die Monolithen 3, 4 eingesetzt werden.

Zu diesem Zweck sind bei den hier gezeigten Ausführungsformen die Aussparungen 13 geringfügig kleiner dimensioniert als die Distanzelemente 9. Dieses Untermaß ermöglicht ein selbsthaltendes Einpressen der Distanzelemente 9 in die Lagermatte 5.

Zweckmäßig sind die Distanzelemente 9 und die Lagermatte 5 als separate Bauteile ausgestaltet. Ebenso ist es grundsätzlich möglich, die Distanzelemente 9 in die Lagermatte 5 zu integrieren. Insbesondere dann, wenn die Lagermatte 5 als Gestrick, insbesondere als Drahtgestrick, ausgebildet ist, können die Distanzelemente 9 besonders einfach mit der Lagermatte 5 verbunden werden. Der Zusammenbau des Mehrbettkatalysators 1 vereinfacht sich dadurch zusätzlich.

Der zwischen den beiden Monolithen mit Hilfe der Distanzelemente 9 bereitgestellte und hinsichtlich seiner Dimension sichergestellte Spalt 8 kann für eine bestimmte Anwendungsform z.B. für eine Abgassonde 14 benötigt werden, die in Fig. 1 durch eine unterbrochene Linie angedeutet ist. Bei einer solchen Abgassonde 14 kann es sich beispielsweise um eine Sauerstoff-Sonde handeln, die im Rahmen einer sogenannten "on-board-Diagnose" verwendet werden kann. Zur Aufnahme einer solchen Abgassonde 14 ist der Mehrbettkatalysator 1 hier mit einem geeigneten Anschlußstutzen 15 ausgestattet, der am Gehäuse 2 im Bereich des Spalts 8 befestigt, insbesondere angeschweißt ist. Um die Befestigung des Anschlußstutzens 15 am Gehäuse 2 zu vereinfachen, kann am Gehäuse 2 im Bereich des Spalts 8 ein ebenes Plateau 16 ausgeformt sein, auf welches der Anschlußstutzen 15 mit einer ebenen Stirnseite aufgesetzt und mit dem Gehäuse 2, insbesondere mittels einer Kehlschweißnaht, verbindbar ist. Bei dieser Ausführungsform besitzt die Lagermatte 5 im Bereich des Anschlußstutzens 15 eine geeignete Ausnehmung 17 in Form einer radialen Durchtrittsöffnung. In dieser Ausnehmung 17 kann die Abgassonde 14 radial hineinragen. Die Ausnehmung 17 ermöglicht einen ordnungsgemäßen Betrieb der Abgassonde 14.

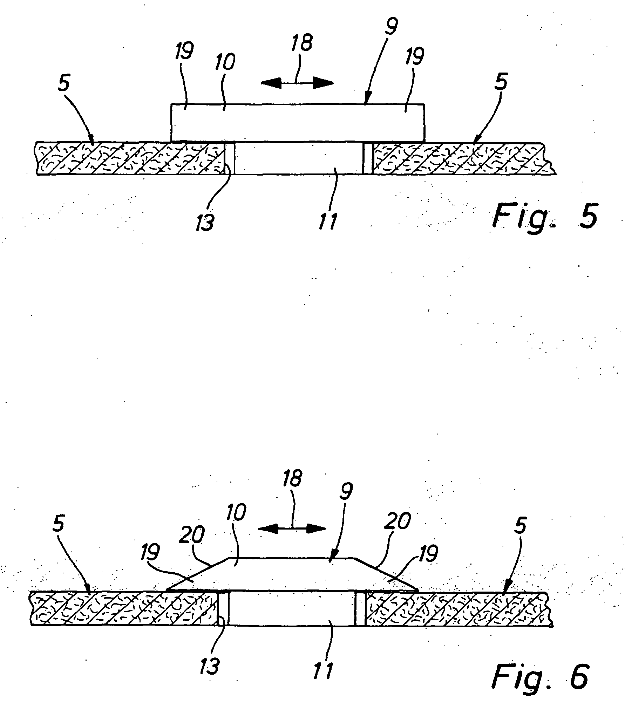

Die Fig. 5 und 6 zeigen jeweils einen Ausschnitt der Lagermatte 5 im Bereich einer der Aussparungen 13 mit darin eingesetztem Distanzelement 9. Die Blickrichtung ist dabei in Richtung der Längsmittelachse 12 der Monolithen 3, 4 gerichtet. Bei diesen besonderen Ausführungsformen besitzen die Distanzelemente 9 auch in dieser Blickrichtung ein T-Profil. Dementsprechend weist bei diesen Distanzelementen 9 der jeweilige Distanzierabschnitt 10 in einer durch einen Doppelpfeil 18 symbolisierten Umfangsrichtung der Monolithen 3, 4 an beiden Seiten jeweils einen Überstand 19 auf, der in der Umfangsrichtung 18 über den an den Distanzierabschnitt 10 angrenzenden Halteabschnitt 11 vorsteht. Die Dimensionierung dieser Überstände 19 ist dabei so gewählt, dass sie die Aussparung 13 an deren Rand in der Umfangsrichtung 18 jeweils übergreifen, wenn das jeweilige Distanzelement 9 in die zugehörige Aussparung 13 eingesetzt ist. Diese Bauweise gewährleistet dabei eine formschlüssige Halterung des jeweiligen Distanzelements 9 an der Lagermatte 5, zumindest im Einbauzustand, wenn der jeweilige Halteabschnitt 11 den oder die Monolithen 3, 4 ebenfalls randseitig übergreift. Im Einbauzustand liegen dann die Überstände 19 radial an der Lagermatte 5 an, derart, dass radial außenliegende Außenseiten der Überstände 19 an einer radial innenliegenden Innenseite der Lagermatte 5 im Randbereich der Aussparung 13 zur Anlage kommen.

Die Überstände 19 können grundsätzlich beliebig geformt sein, zweckmäßig jedoch so, dass sich die gewünschte formschlüssige Fixierung des jeweiligen Distanzelements 9 an der Lagermatte 5 im Einbauzustand ergibt. Während der Distanzierabschnitt 10 bei der Ausführungsform gemäß Fig. 5 zur Ausbildung der Überstände 19 einfach in Umfangsrichtung 18 verlängert ist, sind die Überstände 19 bei der Variante gemäß Fig. 6 so gestaltet, dass sie sich in Umfangsrichtung 18 verjüngen. Zu diesem Ziel sind die Überstände 19 hier an ihrer radial innenliegenden Seite mit einer Schräge 20 versehen, die zur Lagermatte 5 hin abfällt.

Mit Hilfe der Überstände 19 wird die Montage des Mehrbettkatalysators 1 vereinfacht. Beispielsweise können die Aussparungen 13 wie in den Fig. 5 und 6 geringfügig größer dimensioniert werden als die Halteabschnitte 11, die für die Montage darin eingesetzt werden.

Der Zusammenbau des Mehrbettkatalysators 1 kann beispielsweise wie folgt durchgeführt werden:

Die Lagermatte 5 wird im abgerollten, flachen Zustand mit den Distanzelementen 9 bestückt. D.h., an der radial innenliegenden Innenseite der Lagermatte 5 werden die Distanzelemente 9 mit ihren Halteabschnitten 11 in die Aussparungen 13 eingesteckt. Anschließend wird zumindest einer der Monolithen 3, 4 auf die Lagermatte 5 aufgelegt. Beim Abrollen des Monolithen 3, 4 wird die Lagermatte 5 gleichzeitig auf den Außenumfang des Monolithen 3, 4 aufgewickelt. Dabei kommen die Halteabschnitte 11 radial außen am Umfang des Monolithen 3, 4 zur Anlage, wodurch die Distanzelemente 9 formschlüssig gehaltert sind, und zwar radial nach innen durch den Formschluss zwischen Monolith 3, 4 und Halteabschnitt 11 und radial nach außen durch den Formschluss zwischen den Überständen 19 und der Lagermatte 5.

## Patentansprüche

1. Mehrbettkatalysator für einen Abgasstrang einer Brennkraftmaschine, insbesondere eines Kraftfahrzeugs,
- mit einem Gehäuse (2), in dem wenigstens zwei katalytisch wirkende Monolithen (3, 4) axial benachbart und in Reihe durchströmbar angeordnet sind,
- wobei die beiden Monolithen (3, 4) umfangsseitig von einer gemeinsamen hitzebeständigen Lagermatte (5) umhüllt und über diese im Gehäuse (2) gelagert sind,
- wobei axial zwischen den beiden Monolithen (3, 4) wenigstens zwei hitzebeständige Distanzelemente (9) angeordnet sind, über die sich die Monolithen (3, 4) axial aneinander abstützen,
**dadurch gekennzeichnet,**
- **dass** die Distanzelemente (9) entlang des Umfangs der Monolithen (3, 4) verteilt angeordnet und jeweils durch ein elastisch nachgiebiges Drahtgestrick aus einem hitzebeständigen Draht gebildet sind.

2. Mehrbettkatalysator nach Anspruch 1,
**dadurch gekennzeichnet,**
**dass** die Distanzelemente (9) radial außen angeordnet sind und sich jeweils mit einem Distanzierabschnitt (10) axial zwischen den Monolithen (3, 4) radial nach innen erstrecken.

3. Mehrbettkatalysator nach Anspruch 2,
**dadurch gekennzeichnet,**
**dass** die Distanzelemente (9) jeweils einen radial an den Distanzierabschnitt (10) anschließenden Halteabschnitt (11) aufweisen, der zumindest einen der Monolithen (3, 4) radial außen in axialer Richtung übergreift.

4. Mehrbettkatalysator nach Anspruch 3,
**dadurch gekennzeichnet,**
**dass** sich die Monolithen (3, 4) über die Halteabschnitte (11) der Distanzelemente (9) radial am Gehäuse (2) abstützen.

5. Mehrbettkatalysator nach Anspruch 3 oder 4,
**dadurch gekennzeichnet,**
**dass** bei wenigstens einem Distanzelement (9) der Distanzierabschnitt (10) an wenigstens einer Seite einen in Umfangsrichtung (18) über den Halteabschnitt (11) vorstehenden Überstand (19) aufweist.

6. Mehrbettkatalysator nach Anspruch 5,
**dadurch gekennzeichnet,**
**dass** sich der Überstand (19) in Umfangsrichtung verjüngt.

7. Mehrbettkatalysator nach Anspruch 5 oder 6,
**dadurch gekennzeichnet,**
**dass** zumindest einer der Überstände (19) im Einbauzustand radial an der Lagermatte (5) anliegt.

8. Mehrbettkatalysator nach einem der Ansprüche 1 bis 7,
**dadurch gekennzeichnet,**
**dass** die Distanzelemente (9) einen L-förmigen oder T-förmigen axialen Querschnitt aufweisen.

9. Mehrbettkatalysator nach einem der Ansprüche 1 bis 8,
**dadurch gekennzeichnet,**
**dass** die Distanzelemente (9) bezüglich einer Längsmittelachse (12) der Monolithen (3, 4) als Kreisbogensegmente ausgebildet sind.

10. Mehrbettkatalysator nach einem der Ansprüche 1 bis 9,
**dadurch gekennzeichnet,**
**dass** sich die Distanzelemente (9) radial außen am Gehäuse (2) abstützen.

11. Mehrbettkatalysator nach einem der Ansprüche 1 bis 10,
**dadurch gekennzeichnet,**
**dass** die Lagermatte (5) für jedes Distanzelement (9) eine Aussparung (13) aufweist, in der das jeweilige Distanzelement (9) angeordnet ist und von der aus sich das jeweilige Distanzelement (9) axial zwischen den Monolithen (3, 4) radial nach innen erstreckt.

12. Mehrbettkatalysator nach Anspruch 11 wenn abhängig von einem der Ansprüche 5 bis 7,
**dadurch gekennzeichnet,**
**dass** zumindest einer der Überstände (19) so dimensioniert ist, dass er im Einbauzustand die Aussparung (13) in Umfangsrichtung (18) randseitig übergreift.

13. Mehrbettkatalysator nach einem der Ansprüche 1 bis 12,
**dadurch gekennzeichnet,**
**dass** die Distanzelemente (9) in die Lagermatte (5) integriert sind.

14. Mehrbettkatalysator nach einem der Ansprüche 1 bis 13,
**dadurch gekennzeichnet,**
**dass** die Lagermatte (5) und die Distanzelemente (9) jeweils als Gestrick aus einem hitzebeständigen Material gebildet und miteinander verbunden sind.

15. Mehrbettkatalysator nach einem der Ansprüche 1 bis 14,
**dadurch gekennzeichnet,**
**dass** das Gehäuse (2) in einem Axialabschnitt, in dem die beiden Monolithen (3, 4) durch die Distanzelemente (9) voneinander axial beabstandet sind, einen Anschlußstutzen (15) aufweist, der sich zum Anschluss einer Abgassonde (14) eignet.

16. Mehrbettkatalysator nach Anspruch 15,
**dadurch gekennzeichnet,**
**dass** am Gehäuse (2) im Bereich des Anschlußstutzens (15) ein ebenes Plateau (16) ausgebildet ist, an dem der Anschlussstutzen (15) angebracht ist.

17. Mehrbettkatalysator nach Anspruch 15 oder 16,
**dadurch gekennzeichnet,**
**dass** die Lagermatte (5) im Bereich des Anschlußstutzens (15) eine Ausnehmung (17) aufweist, in welche eine Abgassonde (14) radial hineinragen kann.

## Claims

1. A multi-bed catalyzer for an exhaust system of a combustion engine, in particular, of a motor vehicle,
- with a housing (2), in which at least two catalytic monoliths (3, 4) are arranged axially adjacent and are arranged to be axially flowed-through with current in succession,
- wherein the two monoliths (3, 4) are encased on a circumfertial side by a common heat-resistant bearing mat (5) and are supported by means of the bearing mat (5) in the housing (2),
- wherein axially between the two monoliths (3, 4) at least two heat-resistance distancing elements (9) are arranged, wherein the monoliths are axially supported on one another by means of the distancing elements (9),
**characterized in that** the distancing elements (9) are arranged distributed along the circumference of the monoliths (3, 4) and are formed respectively by means of an elastically resilient wire web made from a heat-resistant wire.

2. The multi-bed catalyzer according to claim 1, **characterized in that** the distancing elements (9) are arranged radially outward and extend radially inward with a distancing section (10) axially between the monoliths (3, 4).

3. The multi-bed catalyzer according to claim 2, **characterized in that** the distancing elements (9) respectively have a retaining section connecting to the distancing section (10), wherein the retaining section (11) engages at least one of the monoliths (3, 4) radially outward in an axial direction.

4. The multi-bed catalyzer according to claim 3, **characterized in that** the monoliths (3, 4) support the distancing elements (9) radially in the housing (2) by means of the retaining sections (11).

5. The multi-bed catalyzer according to claim 3 or 4, **characterized in that** when there is at least one spacer element (9), the spacer section (10) on at least one side has a projection (19) which protrudes in the circumferential direction (18) above the mounting section (11).

6. The multi-bed catalyzer according to claim 5, **characterized in that** the projection (19) tapers in the circumferential direction.

7. The multi-bed catalyzer according to claim 5 or 6, **characterized in that** in the installed state, at least one of the projections (19) is in radial contact with the bearing mat (5).

8. The multi-bed catalyzer according to one of claims 1 through 7, **characterized in that** the distancing elements (9) have an L-shaped or T-shaped axial cross section.

9. The multi-bed catalyzer according to one of claims 1 through 8, **characterized in that** the distancing elements (9) are formed as circular arc sections with reference to a longitudinal center axis (12) of the monoliths (3, 4).

10. The multi-bed catalyzer according to one of claims 1 through 9, **characterized in that** the distancing elements (9) are supported radially outward on the housing (2).

11. The multi-bed catalyzer according to one of claims 1 through 10, **characterized in that** the bearing mat (5) for each distancing element (9) has a recess (13), wherein a respective distancing element (9) is arranged in each recess (13) and wherein each distancing element (9) extends axially between the monoliths (3, 4) radially inward from a respective recess (13).

12. The multi-bed catalyzer according to claim 11 if depending on one of the claims 5 through 7, **characterized in that** at least one of the projections (19) is dimensioned so that in the installed state, it extends at the edge over the recess (13) in the circumferential direction (18).

13. The multi-bed catalyzer according to one of claims 1 through 12, **characterized in that** the distancing elements (9) are integrated in the bearing mat (5).

14. The multi-bed catalyzer according to one of claims 1 through 13, **characterized in that** the bearing mat (5) and the distancing elements (9), respectively, are formed as webs from a heat-resistance material and are connected with one another.

15. The multi-bed catalyzer according to one of claims 1 through 14, **characterized in that** in an axial section, the housing (2) has a pivoting connection (15) in which the two monoliths (3, 4) are axially spaced from one another by means of the distancing elements (9), wherein the pivoting connection (15) is suitable for connecting an exhaust probe.

16. The multi-bed catalyzer according to claim 15, **characterized in that** on the housing (2) in a region of the pivoting connection (15), a flat plateau (16) is formed, wherein the pivoting connection (15) is mounted on the flat plateau (16).

17. The multi-bed catalyzer according to claim 15 or 16, **characterized in that** the bearing mat (5) has a recess (17) in a region of the pivoting connection (15), wherein an exhaust probe (14) can project radially into the recess (17).

## Revendications

1. Catalyseur à plusieurs lits pour un tronçon de gaz d'échappement d'un moteur à combustion interne, notamment d'un véhicule automobile,
- avec un boîtier (2) dans lequel au moins deux monolithes (3, 4) à effet catalyseur sont disposés de façon contiguë en direction axiale et de façon à pouvoir être traversés en file par le flux,
- les deux monolithes (3, 4) étant enveloppés côté périphérique d'une natte de montage (5) thermorésistante commune et étant logés dans le boîtier (2) par l'intermédiaire de cette dernière,
- aux moins deux écarteurs thermorésistants (9) par l'intermédiaire desquels les monolithes (3, 4) s'appuient l'un sur l'autre en direction axiale étant disposés axialement entre les deux monolithes (3, 4)
**caractérisé en ce que**
- les écarteurs (9) sont disposés en étant répartis le long de la périphérie des monolithes (3, 4) et sont formés chacun par un tricotage de fil métallique élastique flexible en fil métallique thermorésistant.

2. Catalyseur à plusieurs lits selon la revendication 1,
**caractérisé en ce que** les écarteurs (9) sont disposés à l'extérieur en direction radiale et s'étendent chacun avec une section d'écartement (10) axialement entre les monolithes (3, 4) vers l'intérieur en direction radiale.

3. Catalyseur à plusieurs lits selon la revendication 2,
**caractérisé en ce que** les écarteurs (9) comportent chacun une section de maintien (11) se raccordant sur la section d'écartement (10), qui chevauche au moins l'un des monolithes (3, 4), radialement vers l'extérieur en direction axiale.

4. Catalyseur à plusieurs lits selon la revendication 3,
**caractérisé en ce que** par les sections de maintien (11) des écarteurs (9), les monolithes s'appuient radialement sur le boîtier (2).

5. Catalyseur à plusieurs lits selon la revendication 3 ou 4,
**caractérisé en ce que** sur au moins un écarteur (9), la section d'écartement (10) comporte sur au moins un côté un débordement (18) saillant dans le sens périphérique (18) par-dessus la section de maintien (11).

6. Catalyseur à plusieurs lits selon la revendication 5,
**caractérisé en ce que** le débordement (19) se rétrécit dans le sens périphérique.

7. Catalyseur à plusieurs lits selon la revendication 5 ou 6,
**caractérisé en ce qu'**en position de montage, au moins l'un des débordements (19) s'applique radialement sur la natte de montage (5).

8. Catalyseur à plusieurs lits selon l'une quelconque des revendications 1 à 7,
**caractérisé en ce que** les écarteurs (9) présentent une section transversale axiale en forme de L ou en forme de T.

9. Catalyseur à plusieurs lits selon l'une quelconque des revendications 1 à 8,
**caractérisé en ce que** les écarteurs (9) sont conçus sous la forme de segments en arc de cercle, par apport à un axe médian longitudinal (12) des monolithes (3, 4) .

10. Catalyseur à plusieurs lits selon l'une quelconque des revendications 1 à 9,
**caractérisé en ce que** les écarteurs (9) s'appuient radialement sur l'extérieur du boîtier (2).

11. Catalyseur à plusieurs lits selon l'une quelconque des revendications 1 à 10,
**caractérisé en ce que** la natte de montage (5) comporte pour chaque écarteur (9) un évidement (13) dans lequel l'écarteur (9) concerné est disposé et à partir duquel l'écarteur (9) concerné s'étend axialement entre les monolithes (3, 4), en direction radiale vers l'intérieur.

12. Catalyseur à plusieurs lits selon la revendication 11, s'il dépend de l'une des revendications 5 à 7,
**caractérisé en ce qu'**au moins l'un des débordements (19) est dimensionné de façon à ce qu'en position de montage, il chevauche l'évidement (13) sur son bord, dans le sens périphérique (18).

13. Catalyseur à plusieurs lits selon l'une quelconque des revendications 1 à 12,
**caractérisé en ce que** les écarteurs (9) sont intégrés dans la natte de montage (5).

14. Catalyseur à plusieurs lits selon l'une quelconque des revendications 1 à 13,
**caractérisé en ce que** la natte de montage (5) et les écarteurs (9) sont respectivement conçus en un tricotage d'une matière thermorésistante et reliés entre eux.

15. Catalyseur à plusieurs lits selon l'une quelconque des revendications 1 à 14,
**caractérisé en ce que** dans une section axiale, dans laquelle les deux monolithes (3, 4) sont axialement distancés entre eux par les écarteurs (9), le boîtier (2) comporte un manchon de raccordement (15) qui est adapté pour raccorder une sonde de gaz d'échappement (14).

16. Catalyseur à plusieurs lits selon la revendication 15,
**caractérisé en ce que** dans la zone du manchon de raccordement (15), un plateau plan (16) sur lequel le manchon de raccordement (15) est monté est conçu sur le boîtier (2).

17. Catalyseur à plusieurs lits selon l'une quelconque des revendications 15 ou 16
**caractérisé en ce que** dans la zone du manchon de raccordement (15), la natte de montage (5) comporte un évidement (17) dans lequel une sonde de gaz d'échappement (14) peut saillir en direction radiale.
